# EUROPÄISCHE PATENTSCHRIFT

(11) **EP 2 758 274 B1**
(45) Veröffentlichungstag und Bekanntmachung des Hinweises auf die Patenterteilung: **21.10.2015**
(21) Anmeldenummer: 12740550.4
(22) Anmeldetag: 19.07.2012
(51) Int. Cl.: B60Q 1/56, B60R 1/00, B60R 11/00, B60R 11/04

(54) **VERFAHREN UND KAMERASYSTEM ZUR ÜBERWACHUNG EINES FAHRZEUGUMGEBUNGSBEREICHS MITTELS EINER RÜCKFAHRKAMERA WÄHREND DES BETRIEBES EINER BELEUCHTUNGSVORRICHTUNG ZUR BELEUCHTUNG DES HECKNUMMERNSCHILDES DES KRAFTFAHRZEUGES**
METHOD AND CAMERA SYSTEM FOR MONITORING A SURROUNDING REGION OF A VEHICLE BY MEANS OF A REVERSING CAMERA DURING THE OPERATION OF AN ILLUMINATING DEVICE FOR ILLUMINATING THE REAR NUMBER PLATE OF THE MOTOR VEHICLE
PROCÉDÉ ET SYSTÈME DE CAMÉRA PERMETTANT DE SURVEILLER UNE ZONE ENVIRONNANT UN VÉHICULE AU MOYEN D'UNE CAMÉRA DE RECUL PENDANT LE FONCTIONNEMENT D'UN DISPOSITIF D'ÉCLAIRAGE SERVANT À ÉCLAIRER LA PLAQUE D'IMMATRICULATION ARRIÈRE DU VÉHICULE AUTOMOBILE

(30) Priorität: 19.09.2011 DE 102011082974
(43) Veröffentlichungstag der Anmeldung: 30.07.2014
(73) Patentinhaber: Robert Bosch GmbH, 70442 Stuttgart (DE)
(72) Erfinder: SCHNEIDER, Marcus, 71642 Ludwigsburg (DE); NIEMZ, Volker, 71277 Rutesheim (DE)
(86) Internationale Anmeldenummer: PCT/EP2012/064134
(87) Internationale Veröffentlichungsnummer: WO 2013/041265

(56) Entgegenhaltungen:
- EP-A2- 1 862 354
- WO-A1-00/15462
- JP-A- 2005 178 576

## Beschreibung

### Bereich der Erfindung

Die vorliegende Erfindung betrifft ein Verfahren zur Überwachung mindestens eines Fahrzeugumgebungsbereichs mittels mindestens einer Rückfahrkamera während des Betriebes mindestens einer Beleuchtungsvorrichtung zur Beleuchtung des Hecknummernschildes eines Kraftfahrzeuges. Auch betrifft die Erfindung ein Kamerasystem zum Durchführen des erfindungsgemäßen Verfahrens. Ferner betrifft die Erfindung ein Fahrzeug mit einem erfindungsgemäßen Kamerasystem.

### Stand der Technik

Gemäß der Straßenverkehrzulassungsordnung (StVZO) muss das Hecknummernschild eines Kraftfahrzeuges beleuchtet werden. Für die Installation einer Rückfahrkamera stellt dies ein Problem dar, da das Licht der Beleuchtungsvorrichtung für das Hecknummernschild in die Rückfahrkamera einstreuen kann. Dadurch kann die Bildqualität der Rückfahrkamerabilder unter Umständen empfindlich gemindert werden.

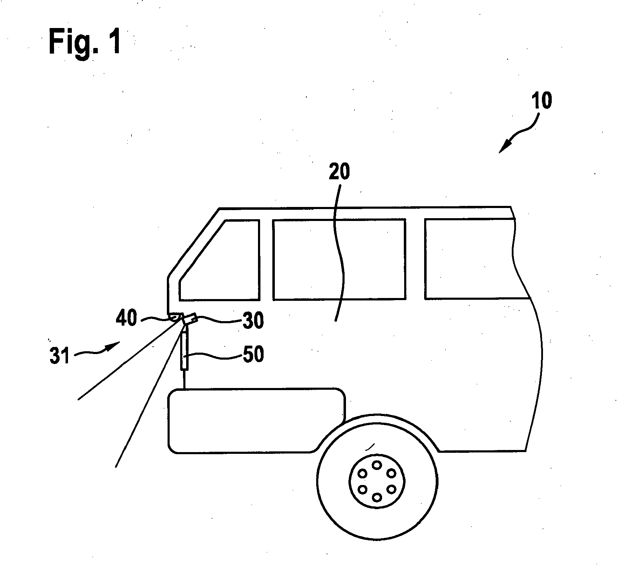

In der Figur 1 ist ein in dem Stand der Technik häufig vorkommendes Fahrzeug 10 mit einem Kamerasystem 31 mit einer in dem Fahrzeugheck 20 eingebauten Rückfahrkamera 30 dargestellt. In der Figur 1 ist auch eine Beleuchtungsvorrichtung 40 zum Beleuchten des Hecknummernschildes 50 dargestellt. Die Beleuchtungsvorrichtung 40 strahlt sowohl auf das Hecknummernschild 50 als auch in die Rückfahrkamera 30. Folglich sinkt die Bildqualität der Rückfahrkamerabilder sichtbar.

In der Regel wird die Rückfahrkamera oder die Beleuchtungsvorrichtung daher entsprechend angepasst oder platziert. Dies führt teilweise zu einer Modifikation der Heckklappenkonstruktion, was empfindliche Kostennachteile mit sich bringt.

Die Beleuchtungsvorrichtungen für die Hecknummernschilder sind immer häufiger getaktet ausgeführt, d.h. sie schalten die Beleuchtung der Beleuchtungsvorrichtung beispielsweise mit einer Schaltfrequenz von größer als 10 Hz im Wechsel an und wieder aus. Bekannt sind beispielsweise getaktet ausgeführte LED-Beleuchtungsvorrichtungen, die bei Kraftfahrzeugen häufig verwendet werden.

JP 2005178576 A beschreibt ein Verfahren zur überwachung eines Fahrzeugumgebungsbereichs gemäß den Oberbegriff des Anspruchs 1.

Aus dem Dokument JP 2009220674 A ist ein Kraftfahrzeug mit einer in dem Kraftfahrzeugheck eingebauten Rückfahrkamera und einer Beleuchtungsvorrichtung für das Hecknummernschild bekannt. Die Rückfahrkamera dient zur Überwachung des rückwärtigen Fahrzeugumgebungsbereiches. Um eine Beeinträchtigung der Bildqualität der Rückfahrkamerabilder durch die Beleuchtung des Hecknummernschildes zu vermeiden, wird die Beleuchtungsvorrichtung für das Hecknummerschild ausgeschaltet, wenn eine rückwärtige Bewegung des eigenen Fahrzeuges detektiert wird.

Nachteilig dabei ist, das eine Überwachung des rückwärtigen Fahrzeugumgebungsbereichs während der normalen Vorwärtsfahrt des eigenen Fahrzeuges nur mittels der durch die Hecknummerschildbeleuchtung beleuchteten Rückfahrkamerabilder geschieht. Die Bildqualität solcher beleuchteten Bilder kann unter Umständen sehr schlecht sein. Dadurch kann es passieren, dass Hindernisse aus dem hinteren Fahrzeugumgebungsbereich sehr spät erkannt werden, was zu einer Erhöhung des Umfallrisikos führt.

### Offenbarung der Erfindung

Erfindungsgemäß wird ein Verfahren zur Überwachung mindestens eines Fahrzeugumgebungsbereichs mittels mindestens einer Rückfahrkamera während des Betriebes mindestens einer Beleuchtungsvorrichtung zur Beleuchtung des Hecknummernschildes eines Fahrzeuges bereitgestellt, bei dem die Beleuchtungsvorrichtung derart getaktet betrieben wird, dass die Beleuchtungsvorrichtung abwechselnd in einem ersten, einen ersten Zeitraum andauernden Funktionszustand und in einem zweiten, einen zweiten Zeitraum andauernden Funktionszustand betrieben wird, und bei dem Kamerabilder des Fahrzeugumgebungsbereiches mittels der Rückfahrkamera zumindest während mehreren ersten Zeiträumen aufgenommen werden, während denen die Beleuchtungsvorrichtung in dem ersten Funktionszustand betrieben wird, wobei während der Dauer des ersten Funktionszustandes die Beleuchtungsvorrichtung ausgeschaltet wird oder die Helligkeit der Beleuchtungsvorrichtung derart niedrig eingestellt wird, dass die Beleuchtungsvorrichtung keinen negativen Einfluss auf die aufgenommenen Kamerabilder hat, und während der Dauer des zweiten Funktionszustandes die Beleuchtungsvorrichtung eingeschaltet wird oder die Helligkeit der Beleuchtungsvorrichtung derart hoch eingestellt wird, dass das Hecknummernschild ausreichend beleuchtet wird.

Erfindungsgemäß wird weiterhin ein Kamerasystem zum Durchführen des erfindungsgemäßen Verfahren bereitgestellt, wobei das Kamerasystem mindestens eine Rückfahrkamera und mindestens eine Beleuchtungsvorrichtung zur Beleuchtung des Hecknummernschildes umfasst, die derart getaktet betrieben ist, dass die Beleuchtungsvorrichtung abwechselnd in einem ersten, einen ersten Zeitraum andauernden Funktionszustand und in einem zweiten, einen zweiten Zeitraum andauernden Funktionszustand betrieben ist, und das Kamerasystem dazu ausgebildet ist, Kamerabilder des Fahrzeugumgebungsbereichs mittels der Rückfahrkamera zumindest während mehreren ersten Zeiträumen aufzunehmen, während denen die Beleuchtungsvorrichtung in dem ersten Funktionszustand betrieben ist. Während der Dauer des ersten Funktionszustandes ist die Beleuchtungsvorrichtung ausgeschaltet oder die Helligkeit der Beleuchtungsvorrichtung derart niedrig eingestellt, dass die Beleuchtungsvorrichtung keinen negativen Einfluss auf die aufgenommenen Kamerabilder hat. Während der Dauer des zweiten Funktionszustandes ist die Beleuchtungsvorrichtung eingeschaltet oder die Helligkeit der Beleuchtungsvorrichtung derart hoch eingestellt, dass das Hecknummernschild ausreichend beleuchtet ist.

Die Unteransprüche zeigen bevorzugte Weiterbildungen der Erfindung.

Bei dem erfindungsgemäßen Verfahren werden die aufgenommenen Kamerabilder bevorzugt während mehreren zweiten Zeiträumen ausgewertet, während deren die Beleuchtungsvorrichtung für das Hecknummernschild in dem zweiten Funktionszustand betrieben wird.

Mittels des erfindungsgemäßen Verfahrens werden sowohl das Rückfahrkamera als auch die Beleuchtungsvorrichtung in ihrer Funktion zeitversetzt betrieben. Mit anderen Wörtern, kann die Bilderfassung bevorzugt immer dann erfolgen, wenn die Rückfahrkamera ausgeschaltet ist und die Auswertung der Rückfahrkamerabilder vorzugsweise immer dann erfolgen, wenn die Rückfahrkamera eingeschaltet ist.

Erfindungsgemäß wird während des Aufnahmezeitraumes (während der mehreren ersten Zeiträumen) eines Rückfahrkamerabildes die Beleuchtungsvorrichtung deaktiviert beziehungsweise die Helligkeit der Beleuchtungsvorrichtung so weit verringert, dass sich kein relevanter Einfluss mehr auf die aufgenommenen Kamerabilder ergibt. Ist die Bildaufnahme beispielsweise nach 30 ms abgeschlossen, dann wird die Beleuchtung wieder zeitweise (während der mehreren zweiten Zeiträume) aktiviert, beziehungsweise die Helligkeit zeitweise wieder so weit erhöht, dass das Hecknummernschild wieder ausreichend wahrnehmbar beleuchtet wird.

Mittels des erfindungsgemäßen Verfahrens ist eine kontinuierliche Überwachung des hinter dem eigenen Fahrzeug liegenden Fahrzeugumgebungsbereichs mittels der Rückfahrkamera insbesondere während der gesamten Fahrtzeit möglich. Dadurch wird das Unfallrisiko, insbesondere das Auffahrunfallrisiko deutlich verringert. Darüber hinaus kann eine Rückfahrkamera aufwandsarm unabhängig von der Position, Ausrichtung und Intensität der Beleuchtungsvorrichtung für das Hecknummernschildes platziert werden. Umgekehrt, kann auch die Beleuchtungsvorrichtung für das Hecknummernschild unabhängig von der Position und Ausrichtung der Rückfahrkamera positioniert werden.

Das einzigartige erfindungsgemäße Verfahren ermöglicht weiterhin die Integration einer Rückfahrkamera in einer Beleuchtungsvorrichtung und dadurch insbesondere auch das Erstellen eines robusten Nachrüstsatzes.

Durch das erfindungsgemäße Verfahren wird ferner ein Stillegen einer Hecknummernschildbeleuchtung vermieden.

Insbesondere wird die Beleuchtungsvorrichtung mit einer vordefinierten Schaltfrequenz derart getaktet betrieben, dass sie im Wechsel während der ersten Zeiträume aus- und während der zweiten Zeiträume eingeschaltet wird.

Bei dem erfindungsgemäßen Verfahren werden insbesondere Beleuchtungsvorrichtungen verwendet, die unabhängig von der Rückfahrkamera vorzugsweise mit einer definierten An/Aus-Frequenz betrieben werden. Das Kamerasystem, das die Rückfahrkamera umfasst, ist erfindungsgemäß dazu ausgebildet, automatisch die An/Aus-Frequenz beziehungsweise das An/Aus-Zeitverhalten der Beleuchtungsvorrichtung und/oder der zeitliche Verlauf der Helligkeit der Beleuchtungsvorrichtung mittels einer Bildauswertung zu ermitteln.

Insbesondere wird die An/Aus-Frequenz beziehungsweise das An/Aus-Zeitverhalten der Beleuchtungsvorrichtung und/oder der zeitliche Verlauf der Helligkeit der Beleuchtungsvorrichtung durch das Ausmessen der durchschnittlichen Bildhelligkeit für jedes Kamerabild und/oder durch das Durchführen einer Frequenzanalyse des zeitlichen Durchschnittshelligkeitsverlaufs während einer Kalibrierungsphase. Dabei wird die Bilderfassung anhand der ermittelten Informationen derart zeitlich gesteuert, dass die Videobilder bevorzugt bei geringer Beleuchtungshelligkeit beziehungsweise beim Vorliegen einer einen vordefinierten Helligkeitswert unterschreitenden Helligkeit der Beleuchtungsvorrichtung erfasst werden.

Bei dem erfindungsgemäßen Verfahren wird vorzugsweise eine übliche Beleuchtungsvorrichtung verwendet, die getaktet ausgeführt ist und eine Ein-Ausschaltfrequenz von insbesondere mehr als 10 Hz aufweist.

Vorzugsweise werden die von der Beleuchtungsvorrichtung beeinflussten oder negativ beeinflussten Kamerabilder der Rückfahrkamera mittels einer Bildauswertung erkannt und verworfen und die von der Beleuchtungsvorrichtung nicht beeinflussten oder nicht negativ beeinflussten Kamerabilder der Rückfahrkamera vorzugsweise auch anstelle der entsprechenden und verworfenen Kamerabilder mittels eines Rückfahrdisplay angezeigt.

Mit anderen Worten können die zyklisch beeinflussten Kamerabilder als solche erkannt und verworfen werden, d.h. dass zum Beispiel das eventuell zuletzt aufgenommene, unbeeinflusste Kamerabild einfach länger im Rückfahrdisplay dargestellt wird.

Erfindungsgemäß wird weiterhin ein Fahrzeug mit einem erfindungsgemäßen Kamerasystem bereitgestellt.

Das erfindungsgemäße Kamerasystem ermöglicht eine Überwachung des hinter dem Fahrzeug liegenden Umgebungsbereichs mittels der Rückfahrkamera während des Betriebes der Beleuchtungsvorrichtung für das Hecknummernschild, ohne das konstruktive Änderungen am Fahrzeug notwendig sind. Durch die Erfindung wird außerdem eine hohe Wahlfreiheit bei der Platzierung der Rückfahrkamera gewährleistet.

### Kurze Beschreibung der Zeichnungen

Nachfolgend werden Ausführungsbeispiele der Erfindung unter Bezugnahme auf die begleitenden Zeichnungen im Detail beschrieben. In der Zeichnungen ist:
- Figur 1: ein Fahrzeug mit einer in dem Fahrzeugheck eingebauten Rückfahrkamera und einer Beleuchtungsvorrichtung für das Hecknummernschild nach dem Stand der Technik,
- Figur 2: ein Fahrzeug mit einem Kamerasystem nach einer ersten Ausführungsform der Erfindung, wobei das genannte Kamerasystem eine in dem Fahrzeugheck eingebaute Rückfahrkamera und eine Beleuchtungsvorrichtung umfasst, und
- Figur 3: eine schematische Darstellung eines synchronisierten Ablaufes der Beleuchtung des Hecknummernschildes und der Rückfahrkamerabilderfassung, wobei der genannte Ablauf von einem Kamerasystem nach der ersten Ausführungsform der Erfindung gesteuert wird.

### Ausführungsform der Erfindung

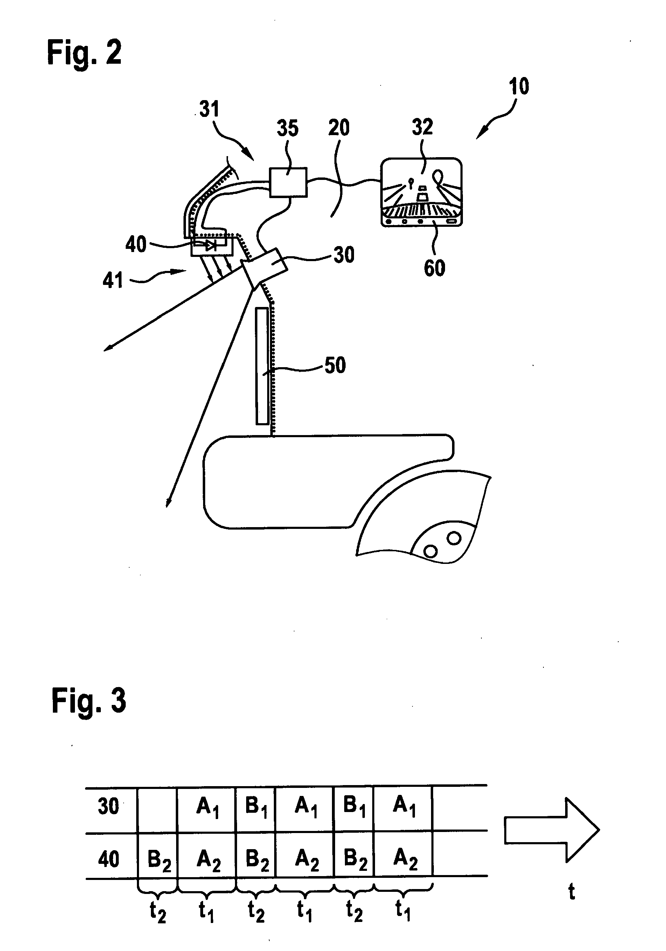

In der Figur 2 ist ein Fahrzeug 10 mit einem Kamerasystem 31 nach einer ersten Ausführungsform der Erfindung dargestellt, das eine in dem Fahrzeugheck 20 eingebaute Rückfahrkamera 30 und eine Beleuchtungsvorrichtung 40 zum Beleuchten des Hecknummernschildes 50 umfasst. Dabei werden die Rückfahrkamera 30 und die Beleuchtungsvorrichtung 40 mittels des erfindungsgemäßen Kamerasystems 31 insbesondere zeitsynchron gesteuert. Die Rückfahrkamera 30, die Beleuchtungsvorrichtung 40 und die Darstellungsvorrichtung (Rückfahrdisplay) 60 zum Anzeigen der Rückfahrkamerabilder 32 sind an dasselbe Steuergerät 35 angeschlossen.

In der Figur 3 wird schematisch dargestellt, wie das Steuergerät 35 die Erfassung und die Auswertung der mittels der Rückfahrkamera 30 aufgenommenen Kamerabilder mit dem Ein- und Ausschalten der mittels der Beleuchtungsvorrichtung 40 erzeugten Hecknummernschildbeleuchtung 41 synchronisiert.

Dabei wird in der Figur 3 der synchronisierte Ablauf der in der ersten Zeile dargestellte Kamerabilderfassung A₁ und Kamerabildauswertung B₁ mittels der Rückfahrkamera 30 und der in der zweiten Zeile dargestellten Beleuchtungszustand der Beleuchtungsvorrichtung 40 für das Hecknummerschildes 50 in Abhängigkeit der Zeit t gezeigt.

In der Figur 3 wird der erste Funktionszustand der Beleuchtungsvorrichtung 40, in dem die Beleuchtungsvorrichtung 40 insbesondere ausgeschaltet ist, mit A₂ kennzeichnet. Der zweite Funktionszustand der Beleuchtungsvorrichtung 40, in dem die Beleuchtungsvorrichtung 40 insbesondere eingeschaltet ist, wird mit B₂ kennzeichnet.

Die Beleuchtungsvorrichtung 40 wird wiederholt während eines ersten Zeitraumes t₁ von insbesondere etwa 30 ms ausgeschaltet und dann anschließend jeweils während eines zweiten Zeitraumes t₂ von insbesondere etwa 10 ms angeschaltet. Vorzugsweise immer dann, wenn die Beleuchtungsvorrichtung 40 ausgeschaltet ist, werden Kamerabilder mittels der Rückfahrkamera 30 erfasst. Diese Bilder werden mittels des erfindungsgemäßen Kamerasystems 31 bevorzugt immer dann ausgewertet, wenn die Beleuchtungsvorrichtung 40 eingeschaltet ist.

Denkbar ist es auch, dass die Helligkeit der Beleuchtungsvorrichtung 40 während der Bilderfassung derart stark reduziert wird, dass die erfassten Kamerabilder von der Beleuchtung der Beleuchtungsvorrichtung 30 nicht negativ beeinflusst werden.

Alternativ dazu, können Kamerabilder auch während mehrerer zweiten Zeiträumen t₂ aufgenommen werden. Das Kamerasystem 31 ist insbesondere dazu ausgebildet, Kamerabilder zu erkennen und zu verwerfen, die von der Beleuchtungsvorrichtung 40 negativ beeinflusst worden sind. Solche Kamerabilder, die während der mehreren zweiten Zeiträumen t₂ aufgenommen und von der Beleuchtungsvorrichtung 40 negativ beeinflusst worden sind, können dann mittels des erfindungsgemäßen Kamerasystems 31 erkannt und verworfen werden. Die von der Beleuchtungsvorrichtung 40 nicht beeinflussten oder nicht negativ beeinflussten Kamerabilder 32 der Rückfahrkamera 30 können dann vorzugsweise auch anstelle der entsprechenden und verworfenen Kamerabilder mittels des Rückfahrdisplays 60 angezeigt werden.

Neben der voranstehenden schriftlichen Offenbarung wird hiermit zur weiteren Offenbarung der Erfindung ergänzend auf die Darstellung in der Figuren 2 und 3 Bezug genommen.

## Patentansprüche

1. Verfahren zur Überwachung mindestens eines Fahrzeugumgebungsbereichs mittels mindestens einer Rückfahrkamera (30) während des Betriebes mindestens einer Beleuchtungsvorrichtung (40) zur Beleuchtung des Hecknummemschildes (50) eines Fahrzeuges (10), bei dem die Beleuchtungsvorrichtung (40) derart getaktet betrieben wird, dass die Beleuchtungsvorrichtung (40) abwechselnd in einem ersten, einen ersten Zeitraum (t₁) andauernden Funktionszustand (A₂) und in einem zweiten, einen zweiten Zeitraum (t₂) andauernden Funktionszustand (B₂) betrieben wird, und bei dem Kamerabilder des Fahrzeugumgebungsbereiches mittels der Rückfahrkamera (30) zumindest während mehreren ersten Zeiträumen (t₁) aufgenommen werden, während denen die Beleuchtungsvorrichtung (30) in dem ersten Funktionszustand betrieben wird, wobei während der Dauer des ersten Funktionszustandes (A₂) die Beleuchtungsvorrichtung (40) ausgeschaltet wird oder die Helligkeit der Beleuchtungsvorrichtung (40) derart niedrig eingestellt wird, dass die Beleuchtungsvorrichtung (40) keinen negativen Einfluss auf die aufgenommenen Kamerabilder hat, und während der Dauer des zweiten Funktionszustandes (B₂) die Beleuchtungsvorrichtung (40) eingeschaltet wird oder die Helligkeit der Beleurhtungsvorrichtung (40) derart hoch eingestellt wird, dass das Hecknummernschild (50) ausreichend beleuchtet wird,
**dadurch gekennzeichnet, dass**
eine von der Rückfahrkamera (30) unabhängig getakteten Beleuchtungsvorrichtung (40) insbesondere mit einer vordefinierten Ein-Ausschaltfrequenz verwendet wird, mittels einer Bildauswertung der Rückfahrkamerabilder (30) die vordefinierte Ein-Ausscnaltfrequenz der Beleuchtungsvorrichtung (40) und/oder der zeitliche Verlauf der Helligkeit der Beleuchtungsvorrichtung (40) ermittelt wird und die Rückfahrkamera (30) derart zeitlich eingestellt wird, dass sie Kamerabilder beim Vorliegen einer einen vordefinierten Helligkeitswert unterschreitenden Helligkeit der Beleuchtungsvorrichtung (40) aufnimmt.

2. Verfahren nach Anspruch 1, **dadurch gekennzeichnet, dass** bei der Bildauswertung der Rückfahrkamerabilder die durchschnittliche Bildhelligkeit für jedes Rückfahrkamerabild gemessen wird und/oder eine Frequenzanalyse des zeitlichen Verlaufs der durchschnittlichen Bildhelligkeit der Rückfahrkamerabilder durchgeführt wird.

3. Verfahren nach einem der Ansprüche 1 oder 2, **dadurch gekennzeichnet, dass** die von der Beleuchtungsvorrichtung (40) beeinflussten oder negativ beeinflussten Kamerabilder der Rückfahrkamera (30) mittels einer Bildauswertung erkannt und verworfen werden und die von der Beleuchtungsvorrichtung (40) nicht beeinflussten oder nicht negativ beeinflussten Kamerabilder (32) der Rückfahrkamera (30) vorzugsweise auch anstelle der entsprechenden und verworfenen Kamerabilder mittels eines Rückfahrdisplays (60) angezeigt werden.

4. Kamerasystem (31) zum Durchführen eines Verfahren nach einem der vorangehenden Ansprüche, **dadurch gekennzeichnet, dass** das Kamerasystem (31) mindestens eine Rückfahrkamera (30) und mindestens eine Beleuchtungsvorrichtung (40) zur Beleuchtung des Hecknummernschildes (50) umfasst, die derart getaktet betrieben ist, dass die Beleuchtungsvorrichtung (40) abwechselnd in einem ersten, einen ersten Zeitraum (t₁) andauernden Funktionszustand (A₂) und in einem zweiten, einen zweiten Zeitraum (t₂) andauernden Funktionszustand (A₂) betrieben ist, und das Kamerasystem (31) dazu ausgebildet ist, Kamerabilder des Fahrzeugumgebungsbereichs mittels der Rückfahrkamera (30) zumindest während mehreren ersten Zeiträumen (t₁) aufzunehmen, während denen die Beleuchtungsvorrichtung (30) in dem ersten Funktionszustand betrieben ist, wobei während der Dauer des ersten Funktionszustandes (A₂) die Beleuchtungsvorrichtung (40) ausgeschaltet ist oder die Helligkeit der Beleuchtungsvorrichtung (40) derart niedrig eingestellt ist, dass die Beleuchtungsvorrichtung (40) keinen negativen Einfluss auf die aufgenommenen Kamerabilder hat, und während der Dauer des zweiten Funktionszustandes (B₂) die Beleuchtungsvorrichtung (40) eingeschaltet ist oder die Helligkeit der Beleuchtungsvorrichtung (40) derart hoch eingestellt Ist, dass das Hecknummernschild (50) ausreichend beleuchtet ist,
**dadurch gekennzeichnet, dass**
das Kamerasystem (31) eine unabhängig von der Rückfahrkamera (30) getaktete Beleuchtungsvorrichtung (40) insbesondere mit einer vordefinierten Ein-Ausschaltfrequenz umfasst und weiter dazu ausgebildet ist, mittels einer Bildauswertung der Rückfahrkamerabilder die vordefinierte Ein-Ausschaltfrequenz der Beleuchtungsvorrichtung (40) und/oder der zeitliche Verlauf der Helligkeit der Beleuchtungsvorrichtung (40) zu ermitteln und die Rückfahrkamera (30) derart zeitlich einzustellen, dass sie die Kamerabilder beim Vorliegen einer einen vordefinierten Helligkeitswert unterschreitenden Helligkeit der Beleuchtungsvorrichtung aufnimmt.

5. Kamerasystem (31) nach Anspruch 4, **dadurch gekennzeichnet, dass** die Bildauswertung der Rückfahrkamerabilder das Ausmessen der durchschnittlichen Bildhelligkeit für mindestens ein Rückfahrkamerabild und/oder eine Frequenzanalyse des zeitlichen Verlaufs der durchschnittlichen Bildhelligkeit mehrerer Rückfahrkamerabilder umfasst.

6. Kamerasystem (31) nach einem der Ansprüche 4 bis 5 **dadurch gekennzeichnet, dass** das Kamerasystem weiter dazu ausgebildet ist, die von der Beleuchtungsvorrichtung (40) beeinflussten oder negativ beeinflussten Kamerabilder der Rückfahrkamera (30) mittels einer Bildauswertung zu erkennen und zu verwerfen und die von der Beleuchtungsvorrichtung (40) nicht beeinflussten oder nicht negativ beeinflussten Kamerabilder (32) der Rückfahrkamera (30) vorzugsweise auch anstelle der entsprechenden und verworfenen Kamerabilder mittels eines Rückfahrdisplays (60) anzuzeigen.

7. Fahrzeug (10) mit einem Kamerasystems (31) nach einem der Ansprüche 4 bis 6.

## Claims

1. Method for monitoring at least one surrounding region of a vehicle by means of at least one reversing camera (30) during the operation of at least one illuminating device (40) for illuminating the rear number plate (50) of a vehicle (10), in which the illuminating device (40) is operated in a clocked fashion such that the illuminating device (40) is operated alternately in a first functional state (A₂) which lasts for a first time period (t₁) and in a second functional state (B₂) which lasts for a second time period (t₂), and in which camera images of the surrounding region of the vehicle are recorded by means of the reversing camera (30) at least during a plurality of first time periods (t₁) during which the illuminating device (40) is operated in the first functional state, wherein during the first functional state (A₂) the illuminating device (40) is switched off or the brightness of the illuminating device (40) is set low such that the illuminating device (40) does not have a negative influence on the recorded camera images, and during the second functional state (B₂) the illuminating device (40) is switched on or the brightness of the illuminating device (40) is set high such that the rear number plate (50) is sufficiently illuminated,
**characterized in that**
an illuminating device (40) which is clocked independently of the reversing camera (30) is used, in particular with a predefined switch-on/switch-off frequency, the predefined switch-on/switch-off frequency of the illuminating device (40) and/or the time profile of the brightness of the illuminating device (40) are/is determined by means of an image evaluation of the reversing camera images (30), and the reversing camera (30) is set chronologically in such a way that it records camera images during the presence of a brightness of the illuminating device (40) which undershoots a predefined brightness value.

2. Method according to Claim 1, **characterized in that** during the image evaluation of the reversing camera images the average image brightness for each reversing camera image is measured and/or a frequency analysis of the time profile of the average image brightness of the reversing camera images is carried out.

3. Method according to either of Claims 1 and 2, **characterized in that** the camera images of the reversing camera (30) which are influenced by the illuminating device (40) or negatively influenced are detected by means of an image evaluation and rejected, and the camera images (32) of the reversing camera (30) which are not influenced by the illuminating device (40) or not negatively influenced are preferably also displayed by means of a reversing display (60), instead of the corresponding and rejected camera images.

4. Camera system (31) for carrying out a method according to one of the preceding claims, **characterized in that** the camera system (31) comprises at least one reversing camera (30) and at least one illuminating device (40) for illuminating the rear number plate (50), which device is operated in a clocked fashion such that the illuminating device (40) is operated alternately in a first functional state (A₂) which lasts for a first time period (t₁) and in a second functional state (B₂) which lasts for a second time period (t₂), and the camera system (31) is designed to record camera images of the surrounding region of the vehicle by means of the reversing camera (30) at least during a plurality of first time periods (t₁) during which the illuminating device (40) is operated in the first functional state, wherein during the first functional state (A₂) the illuminating device (40) is switched off or the brightness of the illuminating device (40) is set low such that the illuminating device (40) does not have a negative influence on the recorded camera images, and during the second functional state (B₂) the illuminating device (40) is switched on or the brightness of the illuminating device (40) is set high such that the rear number plate (50) is sufficiently illuminated,
**characterized in that**
the camera system (31) comprises an illuminating device (40) which is clocked independently of the reversing camera (30), in particular with a predefined switch-on/switch-off frequency, and is also designed to determine, by means of an image evaluation of the reversing camera images, the predefined switch-on/switch-off frequency of the illuminating device (40) and/or the time profile of the brightness of the illuminating device (40), and to set the reversing camera (30) chronologically in such a way that it records the camera images during the presence of a brightness of the illuminating device which undershoots a predefined brightness value.

5. Camera system (31) according to Claim 4, **characterized in that** the image evaluation of the reversing camera images comprises the measuring of the average image brightness for at least one reversing camera image and/or a frequency analysis of the time profile of the average image brightness of a plurality of reversing camera images.

6. Camera system (31) according to one of Claims 4 to 5, **characterized in that** the camera system is also designed to detect and reject, by means of an image evaluation, the camera images of the reversing camera (30) which are influenced by the illuminating device (40) or negatively influenced, and to preferably also display the camera images (32) of the reversing camera (30) which are not influenced by the illuminating device (40) or not negatively influenced, instead of the corresponding and rejected camera images, by means of a reversing display (60).

7. Vehicle (10) having a camera system (31) according to one of Claims 4 to 6.

## Revendications

1. Procédé pour la surveillance d'au moins une zone environnante d'un véhicule au moyen d'au moins une caméra de recul (30) pendant le fonctionnement d'au moins un dispositif d'éclairage (40) pour l'éclairage de la plaque d'immatriculation arrière (50) d'un véhicule (10), dans lequel le dispositif d'éclairage (40) est exploité de façon synchronisée de telle sorte que le dispositif d'éclairage (40) fonctionne tour à tour dans un premier état de fonctionnement (A₂) qui dure un premier laps de temps (t₁) et dans un deuxième état de fonctionnement (B₂) qui dure un deuxième laps de temps (t₂) et dans lequel des images de caméra de la zone environnante du véhicule sont prises au moyen de la caméra de recul (30) au moins pendant plusieurs premiers laps de temps (t₁) pendant lesquels le dispositif d'éclairage (40) est exploité dans le premier état de fonctionnement, dans lequel, pendant la durée du premier état de fonctionnement (A₂), le dispositif d'éclairage (40) est éteint ou bien la luminosité du dispositif d'éclairage (40) est réglée de manière à être si faible que le dispositif d'éclairage (40) n'a pas d'influence négative sur les images de caméra prises, et le dispositif d'éclairage (40) étant allumé pendant la durée du deuxième état de fonctionnement (B₂) ou bien la luminosité du dispositif d'éclairage (40) étant réglée de manière à être si forte que la plaque d'immatriculation arrière (50) est suffisamment éclairée,
**caractérisé en ce que**
l'on utilise un dispositif d'éclairage (40) synchronisé indépendamment de la caméra de recul (30), en particulier avec une fréquence marche-arrêt prédéfinie, la fréquence marche-arrêt prédéfinie du dispositif d'éclairage (40) et/ou la variation dans le temps de la luminosité du dispositif d'éclairage (40) étant déterminée(s) au moyen d'une évaluation d'image des images de la caméra de recul (30), et la caméra de recul (30) étant réglée dans le temps de manière à ce qu'elle prenne des images de caméra en cas d'occurrence d'une luminosité du dispositif d'éclairage (40) dépassant par le bas une valeur de luminosité prédéfinie.

2. Procédé selon la revendication 1, **caractérisé en ce que**, lors de l'évaluation d'image des images de la caméra de recul, la luminosité moyenne d'image est mesurée pour chaque image de caméra de recul et/ou **en ce qu'**une analyse de fréquence de la variation dans le temps de la luminosité moyenne d'image des images de la caméra de recul est effectuée.

3. Procédé selon l'une des revendications 1 ou 2, **caractérisé en ce que** les images de caméra de la caméra de recul (30) influencées ou négativement influencées par le dispositif d'éclairage (40) sont reconnues grâce à une évaluation d'image et sont rejetées, et **en ce que** les images de caméra (32) de la caméra de recul (30) non influencées ou non négativement influencées par le dispositif d'éclairage (40) sont de préférence également affichées à la place des images de caméra correspondantes et rejetées, au moyen d'un afficheur de recul (60).

4. Système de caméra (31) pour la mise en oeuvre d'un procédé selon l'une des revendications précédentes, **caractérisé en ce que** le système de caméra (31) comprend au moins une caméra de recul (30) et au moins un dispositif d'éclairage (40) pour l'éclairage de la plaque d'immatriculation arrière (50), lequel est exploité de façon synchronisée de telle sorte que le dispositif d'éclairage (40) fonctionne tour à tour dans un premier état de fonctionnement (A₂) qui dure un premier laps de temps (t₁), et dans un deuxième état de fonctionnement (B₂) qui dure un deuxième laps de temps (t₂), et **en ce que** le système de caméra (31) est réalisé pour prendre des images de caméra de la zone environnante du véhicule au moyen de la caméra de recul (30) au moins pendant plusieurs premiers laps de temps (t₁) pendant lesquels le dispositif d'éclairage (40) est exploité dans le premier état de fonctionnement, dans lequel, pendant la durée du premier état de fonctionnement (A₂), le dispositif d'éclairage (40) est éteint ou bien la luminosité du dispositif d'éclairage (40) est réglée de manière à être si faible que le dispositif d'éclairage (40) n'a pas d'influence négative sur les images de caméra prises, et pendant la durée du deuxième état de fonctionnement (B₂), le dispositif d'éclairage (40) étant allumé ou bien la luminosité du dispositif d'éclairage (40) étant réglée de manière à être si forte que la plaque d'immatriculation arrière (50) est suffisamment éclairée,
**caractérisé en ce que**
le système de caméra (31) comprend un dispositif d'éclairage (40) synchronisé indépendamment de la caméra de recul (30), en particulier avec une fréquence marche-arrêt prédéfinie, et est en outre réalisé pour déterminer, au moyen d'une évaluation d'image des images de la caméra de recul, la fréquence marche-arrêt prédéfinie du dispositif d'éclairage (40) et/ou la variation dans le temps de la luminosité du dispositif d'éclairage (40) et pour régler dans le temps la caméra de recul (30) de telle sorte qu'elle prenne les images de caméra en cas d'occurrence d'une luminosité du dispositif d'éclairage dépassant par le bas une valeur de luminosité prédéfinie.

5. Système de caméra (31) selon la revendication 4, **caractérisé en ce que** l'évaluation d'image des images de la caméra de recul comprend la mesure de la luminosité d'image moyenne pour au moins une image de caméra de recul et/ou une analyse de fréquence de la variation dans le temps de la luminosité d'image moyenne de plusieurs images de caméra de recul.

6. Système de caméra (31) selon l'une des revendications 4 à 5, **caractérisé en ce que** le système de caméra est en outre réalisé pour reconnaitre les images de caméra de la caméra de recul (30) influencées ou négativement influencées par le dispositif d'éclairage (40) au moyen d'une évaluation d'image et les rejeter, et pour afficher les images de caméra (32) de la caméra de recul (30) non influencées ou non influencées négativement par le dispositif d'éclairage (40) de préférence également à la place des images de caméra correspondantes et rejetées, au moyen d'un afficheur de recul (60).

7. Véhicule (10) avec un système de caméra (31) selon l'une des revendications 4 à 6.
